# EUROPÄISCHE PATENTSCHRIFT

(11) **EP 3 009 593 B1**
(45) Veröffentlichungstag und Bekanntmachung des Hinweises auf die Patenterteilung: **16.05.2018**
(21) Anmeldenummer: 15182696.3
(22) Anmeldetag: 27.08.2015
(51) Int. Cl.: E21B 17/05, F16L 19/00, F16L 27/02

(54) **BOHRSPÜLEINRICHTUNG MIT VORMONTIERTEM WECHSELEINSATZ**
DRILLING CLEANING DEVICE WITH PRE-ASSEMBLED EXCHANGEABLE INSERT
DISPOSITIF DE FLUIDE DE FORAGE DOTE D'UNE PIECE D'INSERTION PRE-MONTEE

(30) Priorität: 16.10.2014 DE 102014221043
(43) Veröffentlichungstag der Anmeldung: 20.04.2016
(73) Patentinhaber: EagleBurgmann Germany GmbH & Co. KG, 82515 Wolfratshausen (DE)
(72) Erfinder: GLAWION, Michael, 82538 Geretsried (DE); Dr. LANG, Klaus, 82547 Beuerberg (DE); HOFMANN, Jens, 82054 Sauerlach (DE); JOHANNES, Rolf, 82515 Wolfratshausen (DE)
(74) Vertreter: Hoefer & Partner Patentanwälte mbB

(56) Entgegenhaltungen:
- EP-B1- 1 630 347
- US-A- 2 764 428
- US-A- 6 007 105

## Beschreibung

Die vorliegende Erfindung betrifft eine Bohrspüleinrichtung mit einem vormontierten Wechseleisatz zum Verbinden eines stationären, nicht drehenden Spülrohrs mit einem rotierenden Spülrohr, welches in ein Bohrloch eingelassen ist.

Für Bohrungen in der Erdkruste, insbesondere nach Rohstoffen, werden sog. "wash pipe-Anordnungen" verwendet, bei denen ein Bohrkopf am Ende eines rotierenden Rohres angeordnet ist. Durch das Rohr wird von oben eine Spülflüssigkeit nach unten in das Bohrloch geführt, welche dann am Bohrkopf austritt und entlang des Außenumfangs des rotierenden Rohrs wieder zur Erdoberfläche zurückgeführt wird. Ein Problemkreis bei derartigen Bohrlochanordnungen ist eine Abdichtung zwischen einem stationären Spülrohr und dem rotierenden Spülrohr. Um insbesondere aus Umweltgesichtspunkten jegliche Undichtigkeiten an dieser Abdichtung zwischen stationärem und rotierendem Spülrohr zu vermeiden, werden möglichst konservative Lösungen eingesetzt. Eine Lösung zur Abdichtung ist beispielsweise eine Reihenschaltung einer Vielzahl von stationären Dichtungen, beispielsweise Stopfbuchsenpackungen oder Lippenringdichtungen. Bei Ausfall einer dieser stationären Dichtungen sichert dann die nachfolgende stationäre Dichtung ab. Aufgrund der hohen Belastungen beim Bohren ist die Lebensdauer der einzelnen stationären Dichtungen jedoch sehr gering. Hierdurch ist es notwendig, dass die stationären Dichtungen nach einem kurzen Zeitraum ausgetauscht werden müssen. Dies führt jedoch zu einem Stillstand der Bohranlage und somit zu hohen Kosten. Da die stationären Dichtungen einzeln über die Rohrteile gestülpt werden müssen, ist auch der Wechselaufwand sehr hoch. Weiterhin ist aus der EP 1 630 347 B1 eine Abdichtung zwischen einem rotierenden und einem stationären Rohr bekannt, welche eine Gleitringdichtung verwendet. Gleitringdichtungen haben grundsätzlich den Vorteil einer längeren Lebensdauer, solange eine Beschädigung der Gleitflächen vermieden werden kann. Um die Gleitflächen dieser Gleitringdichtung möglichst immer in Anlage zueinander zu halten, ist ein Federelement vorgesehen, welches im Betrieb ständig eine Vorspannung in Axialrichtung auf die Gleitringe aufbringt. Aufgrund der hohen Belastungen beim Bohren muss die Gleitringdichtung jedoch auch nach einer gewissen Zeit gewechselt werden. Hierzu ist dann eine Mutter-Schrauben-Anordnung vorgesehen, mit welcher die Federelemente in Axialrichtung zusammengedrückt werden können, um die Vorspannung auf die Gleitringe zu beenden. Erst dann ist ein Wechsel der Gleitringe möglich. Dieses Wechselverfahren ist aufwendig und zeitintensiv. Weiterhin werden die Gleitringe einzeln entnommen bzw. wieder montiert, so dass die Gefahr besteht, dass während der Montage Beschädigungen an den Gleitflächen auftreten. Hierbei muss insbesondere beachtet werden, dass die Abdichtung zwischen rotierendem und stationärem Spülrohr in einer Glocke eines Bohrturms in mehreren Metern Höhe angeordnet ist und insbesondere externe Einflüsse wie Wetter und Temperatur den Wechselvorgang negativ beeinflussen können, da insbesondere an immer unwirtlicheren Stellen, z.B. auf hoher See und in kalten Regionen der Erde gebohrt wird. Von daher muss der Wechsel trotz möglicherweise äußerst widriger Außenumstände mit größter Vorsicht vorgenommen werden, um Beschädigungen der Gleitflächen zu vermeiden. Dies führt ebenfalls zu einem langen und aufwendigen Wechselprozess.

Ferner ist aus der US 4,557,489 eine Abdichtung mit Gleitringen bekannt, welche druckausgeglichen ist. Hierzu sind entweder in den Gleitringen Bohrungen in Radialrichtung vorgesehen, welche zum äußeren Umfang der Gleitringe für einen Druckausgleich führen oder in Gleitringhalterungen Bohrungen vorgesehen, welche zum äußeren Umfang der Gleitringe führen, um den Druckausgleich bereitzustellen. Bei einer Beschädigung der Dichtung müssen die Gleitringe separat gewechselt werden.

Weiterhin zeigt die US 6,007,105 B eine Bohrspüleinrichtung gemäß dem Oberbegriff des Anspruchs 1.

Es ist daher Aufgabe der vorliegenden Erfindung, eine Bohrspüleinrichtung mit einem rotierenden und einem stationären Spülrohr bereitzustellen, welche bei einfachem und kostengünstigem Aufbau einen schnellen Gleitringwechsel ermöglicht.

Die Aufgabe wird durch eine Bohrspüleinrichtung mit den Merkmalen des Anspruchs 1 gelöst. Die Unteransprüche zeigen bevorzugte Weiterbildungen der Erfindung.

Die erfindungsgemäße Bohrspüleinrichtung hat den Vorteil, dass ein Gleitringwechsel sehr schnell und einfach durchgeführt werden kann. Erfindungsgemäß ist dabei ein vormontierter, auswechselbarer Wechseleinsatz zur Verbindung eines stationären

Spülrohrs mit einem rotierenden Spülrohr vorgesehen, wobei der vormontierte Wechseleinsatz eine Gleitringdichtungsanordnung mit einem stationären Gleitring und einem rotierenden Gleitring umfasst. Ein erster Adapter ist vorgesehen, welcher zwischen dem stationären Spülrohr und dem vormontierten Wechseleinsatz angeordnet ist. Der erste Adapter ist am stationären Spülrohr fixiert und umfasst einen in Axialrichtung wirkenden, ersten Verstellmechanismus. Der vormontierte Wechseleinsatz umfasst selbst einen in Axialrichtung wirkenden zweiten Verstellmechanismus zur Änderung einer axialen Länge des Wechseleinsatzes. Somit sind erfindungsgemäß zwei separate Verstellmechanismen vorgesehen, wobei einer der beiden Verstellmechanismen am stationären Spülrohr angeordnet ist und der andere der beiden Verstellmechanismen in den vormontierten Wechseleinsatz integriert ist. Dadurch ist es möglich, nach Einlegen des vormontierten Wechseleinsatzes in einen Bereich zwischen dem stationären und dem rotierenden Spülrohr zuerst den ersten Verstellmechanismus am ersten Adapter zu verlängern, so dass der Wechseleinsatz fest am ersten Adapter fixiert ist und anschließend den zweiten Verstellmechanismus zu aktivieren, so dass der vormontierte Wechseleinsatz mit dem rotierenden Spülrohr verbunden ist. Somit müssen erfindungsgemäß zwar zwei Verstellmechanismen vorgesehen werden, allerdings können diese schnell und einfach nacheinander betätigt werden, so dass ein schneller Austausch des vormontierten Wechseleinsatzes möglich ist. Da weiterhin im vormontierten Wechseleinsatz Gleitringdichtungen verwendet werden, kann im Vergleich mit in Reihe geschalteten Stoffbuchsen eine sehr lange Lebensdauer des Wechseleinatzes erreicht werden. Weiterhin kann der vormontierte Wechseleinsatz in einer Werkstatt oder dgl. vormontiert werden, so dass auch alle Nebendichtelemente und evtl. vorhandene Federelemente ausgetauscht werden können. Auch dies führt zu einer längeren Lebensdauer des Wechseleinsatzes.

Vorzugsweise umfasst der erste Verstellmechanismus eine erste Schraubverbindung mit einem Außenring und einem Innenring, zwischen welchen ein Gewinde ausgebildet ist. Dadurch kann die Anpassung der Axiallänge zwischen dem ersten Adapter und dem vormontierten Wechseleinsatz durch relatives Drehen von Außenring zu Innenring des ersten Adapters erreicht werden.

Der Außenring der ersten Schraubverbindung weist vorzugsweise erste Werkzeugausnehmungen an einer Außenumfangsfläche auf, welche dafür eingerichtet ist, ein Werkzeug zum Drehen des Außenrings relativ zum Innenring aufzunehmen. Die Ausnehmungen sind vorzugsweise Bohrungen.

Weiter bevorzugt umfasst der zweite Verstellmechanismus eine zweite Schraubverbindung mit einer Außenhülse mit einem Innengewinde, und einer Innenhülse mit einem Außengewinde. Somit ist auch hier zwischen der Außenhülse und der Innenhülse eine Gewindeverbindung vorgesehen, welche durch ein relatives Drehen zwischen Außenhülse und Innenhülse in Axialrichtung verlängert werden kann. Die Steigungen der ersten und zweiten Schraubverbindung sind dabei vorzugsweise gleich, können jedoch auch unterschiedlich sein.

Weiter bevorzugt ist eine Axiallänge der Innenhülse größer als eine Axiallänge der Außenhülse. Somit steht die Innenhülse immer eine vorbestimmte Länge über die Außenhülse über.

Weiter bevorzugt weist die Innenhülse an einem von der Außenhülse nicht überdeckten Bereich an ihrem Außenumfang zweite Werkzeugausnehmungen zur Aufnahme eines Werkzeugs zum Drehen der Innenhülse relativ zur Außenhülse auf. Die zweiten Werkzeugausnehmungen sind ebenfalls vorzugsweise Bohrungen. Besonders bevorzugt sind die zweiten Werkzeugausnehmungen von gleichen geometrischen Abmessungen wie die ersten Werkzeugausnehmungen. Dadurch kann ein Monteur mit dem gleichen Werkzeug sowohl einerseits den ersten Verstellmechanismus am ersten Adapter als auch den zweiten Verstellmechanismus am Wechseleinsatz verstellen.

Um eine Drehmomentübertragung vom rotierenden Spülrohr auf den Wechseleinsatz zu ermöglichen, weist der Wechseleinsatz vorzugsweise an einem zum rotierenden Spülrohr gerichteten Ende einen in Axialrichtung des Spülrohrs vorstehenden Vorsprung auf.

Weiter bevorzugt umfasst der Wechseleinsatz ferner einen Ausrichtring, welcher den vorstehenden Vorsprung am Wechseleinsatz für die Drehmomentübertragung vom rotierenden Spülrohr in Umfangsrichtung ausrichtet. Dadurch kann eine sichere Montage und formschlüssige Verbindung zwischen dem Vorsprung des Wechseleinsatzes und dem rotierenden Spülrohr erreicht werden.

Gemäß einer weiteren bevorzugten Ausgestaltung der vorliegenden Erfindung umfasst die Bohrspüleinrichtung ferner einen zweiten Adapter zwischen dem rotierenden Spülrohr und dem Wechseleinsatz. Hierdurch kann insbesondere die Montage am rotierenden Spülrohr signifikant vereinfacht werden.

Um eine Montage noch weiter zu vereinfachen, ist vorzugsweise eine Montagehilfseinrichtung vorgesehen, welche am stationären Spülrohr angeordnet ist. Die Montagehilfseinrichtung unterstützt dabei eine Montage und Demontage des vormontieren Wechseleinsatzes in den Bereich zwischen dem stationären und dem rotierenden Spülrohr.

Die Montagehilfseinrichtung umfasst bevorzugt einen ersten und zweiten Führungsarm, welche am ersten Adapter angeordnet sind. Die beiden Führungsarme sind vorzugsweise parallel zueinander vorgesehen und weisen weiter bevorzugt Auflageflächen zur Auflage des vormontierten Wechseleinsatzes auf. Weiter bevorzugt weist der vormontierte Wechseleinsatz eine Umfangsnut für einen formschlüssigen Eingriff mit den Führungsarmen auf.

Weiter bevorzugt umfasst der zweite Verstellmechanismus des Wechseleinsatzes eine Verdrehsicherung. Die Verdrehsicherung ist vorzugsweise ein Schraubbolzen oder dergleichen. Die Verdrehsicherung stellt dabei sicher, dass eine Relativposition zwischen der Außenhülse und der Innenhülse im Betrieb sicher gehalten wird. Mit anderen Worten wird nach der Verstellung der Axiallänge des Wechseleinsatzes, welche durch Verdrehen zwischen Außenhülse und Innenhülse erfolgt ist, die Position durch die Verdrehsicherung gesichert. Vor der Demontage muss die Verdrehsicherung selbstverständlich gelöst werden, damit wieder eine Verdrehung zwischen Außenhülse und Innenhülse möglich ist, um eine Verkürzung der Axiallänge des Wechseleinsatzes zu ermöglichen.

Die Verdrehsicherung ist besonders bevorzugt ein Schraubbolzen mit einem an der Spitze des Schraubbolzens angeordneten, federvorgespannten Rastelements, insbesondere einer federvorgespannten Kugel. Das Rastelement greift dabei an einer Ausgangsposition, in welcher der Wechseleinsatz noch nicht axial verlängert ist, in eine erste Ausnehmung an der Außenhülse ein. Dadurch wird eine Grundstellung des vormontierten Wechseleinsatzes definiert. Während der Vormontage kann ein Monteur somit einfach erkennen, wann die vormontierte Position erreicht ist. Ferner ist eine zweite Ausnehmung an der Außenhülse vorgesehen, in welche das Rastelement einrastet, wenn der Wechseleinsatz während der Montage den axial verlängerten Endzustand, d.h., den Endmontagezustand, erreicht hat. Somit ist ebenfalls ein Indikator für eine richtige Position des Erreichens der Endstellung des Wechseleinsatzes im montierten Zustand vorhanden. Diese Maßnahmen erleichtert die Montage erheblich, welche, wie erwähnt, teilweise unter höchst schwierigen Bedingungen aufgrund äußerer Einflüsse vorgenommen werden muss. Durch das federvorgespannte Rastelement erfolgt das Einrasten bei der Montage und das Ausrasten bei der Demontage automatisch durch den Verdrehvorgang zwischen Außenhülse und Innenhülse der Schraubverbindung.

Die Verdrehsicherung ist bevorzugt an einem mit der Innenhülse verbundenen Arm angeordnet, wobei die Außenhülse zwischen dem Arm und der Innenhülse angeordnet ist.

Weiter bevorzugt weist der rotierende und stationäre Gleitring jeweils eine Bandage auf. Hierdurch können die Gleitringe auch hohen Druckbelastungen standhalten.

Um eine Beschädigung des vormontierten Wechseleinsatzes während der Montage bzw. während des Transports des Wechseleinsatzes zu vermeiden, umfasst der Wechseleinsatz vorzugsweise eine Transportsicherung. Die Transportsicherung umfasst wenigstens ein Federelement, um vor einer Endmontage des Wechseleinsatzes eine Vorspannung auf die Gleitringdichtungsanordnung auszuüben. Die Vorspannung wird dabei auf die Gleitringe derart ausgeübt, dass die Gleitflächen der Gleitringe sicher aneinander anliegen, um Beschädigungen der Gleitflächen zu vermeiden. Die Transportsicherung ist dabei zwischen einem Anschlussbauteil zum stationären Spülrohr und einem ersten Gleitringträger zum Halten des stationären Gleitrings angeordnet. Die Transportsicherung ist ferner derart ausgestaltet, dass im endmontierten Zustand des Wechseleinsatzes im Betrieb keine Vorspannung auf die Gleitringdichtung ausgeübt wird. Dies wird beispielsweise durch Vorsehen von Federelementen bereitgestellt, welche im montierten Zustand des Wechseleinsatzes, in welchem eine Axiallänge des Wechseleinsatzes durch den zweiten Verstellmechanismus vergrößert wurde, keine Vorspannung mehr ausüben. Die Federelemente können beispielsweise eine entsprechend kurze Länge aufweisen, so dass im endmontierten, axial verlängerten Zustand des Wechseleinsatzes keine Vorspannung auf die Gleitringe ausgeübt wird. Aufgrund des Eigengewichts des Gleitrings und des Gewichts des ersten Gleitringträgers liegt der stationäre Gleitring trotzdem sicher auf dem rotierenden Gleitring.

Damit der Druck auf die Gleitringe im Betrieb nicht zu stark wird, weist bevorzugt jeweils der rotierende und stationäre Gleitring am inneren Umfang eine Fase auf. Die Fase reicht vorzugsweise von einem inneren Umfang der Gleitringe bis zur Hälfte einer Gleitringbreite. Besonders bevorzugt sind die Fasen an beiden Gleitringen gleich vorgesehen.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Darstellung einer erfindungsgemäßen Bohrspüleinrichtung mit vormontiertem Wechseleinsatz,
- Fig. 2: eine schematische, perspektivische Darstellung eines Wechselvorgangs des Wechseleinsatzes,
- Fig. 3: eine schematische Teilschnittansicht des Wechseleinsatzes während eines ersten Montageschritts, in welchem der Wechseleinsatz in die Bohrspüleinrichtung eingeschoben ist,
- Fig. 4: eine schematische Teilschnittansicht des Wechseleinsatzes, in welcher der Wechseleinsatz mit einem stationären Spülrohr verbunden ist,
- Fig. 5: eine schematische Teilschnittansicht des Wechseleinsatzes während des Vorgangs des Verbindens mit einem rotierenden Spülrohr,
- Fig. 6: eine schematische, perspektivische Ansicht eines Verstellrings zur Ausrichtung des Wechseleinsatzes gegenüber dem rotierenden Spülrohr,
- Fig. 7: eine schematische Teilschnittansicht des Wechseleinsatzes im montierten Zustand, und
- Fig. 8: eine schematische Schnittansicht des Wechseleinsatzes im montierten Zustand, wobei zur besseren Übersichtlichkeit das stationäre und rotierende Spülrohr nicht dargestellt sind.

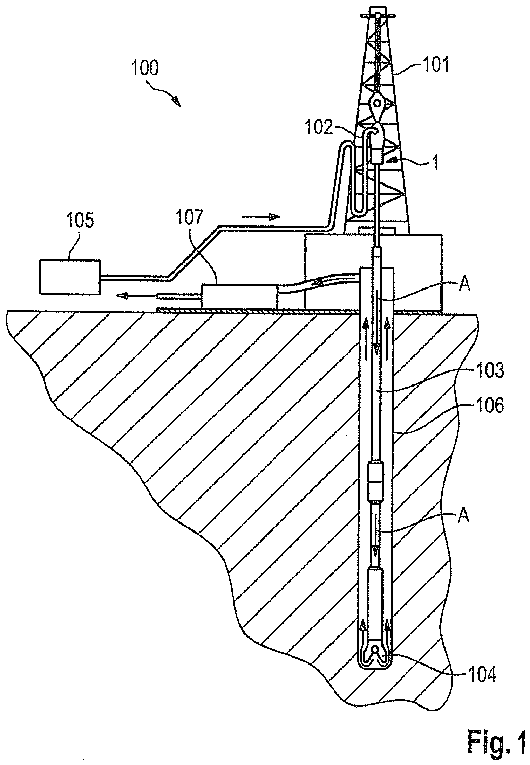

Nachfolgend wird unter Bezugnahme auf die Fig. 1 bis 8 eine Bohrspüleinrichtung 100 gemäß einem bevorzugten Ausführungsbeispiel der Erfindung im Detail beschrieben.

Wie aus Fig. 1 ersichtlich ist, wird ein vormontierter Wechseleinsatz 1 in der Bohrspüleinrichtung 100 verwendet. Die Bohrspüleinrichtung 100 umfasst ein Bohrturm 101 und ist eingerichtet, ein Spülmedium von oben in ein Bohrloch 106 einzubringen (Pfeil A). Die Bohrspüleirichtung 100 umfasst dabei ein stationäres Spülrohr 102 und ein rotierendes Spülrohr 103, an dessen freiem Ende ein Bohrkopf 104 angeordnet ist. Ein Spülmedium wird dabei mittels einer Pumpe 105 über das stationäre Spülrohr 102 in das rotierende Spülrohr 103 eingeführt und tritt am Bohrkopf 104 aus. Das Spülmedium strömt dann am Außenumfang des rotierenden Spülrohrs 103 wieder zur Oberfläche in eine Trenneinrichtung 107 zurück. In der Trenneinrichtung 107 wird dann aus dem Bohrloch 106 ausgespültes Gestein und dergleichen vom Spülmedium getrennt, welches dann in einem Kreislauf wieder verwendet werden kann.

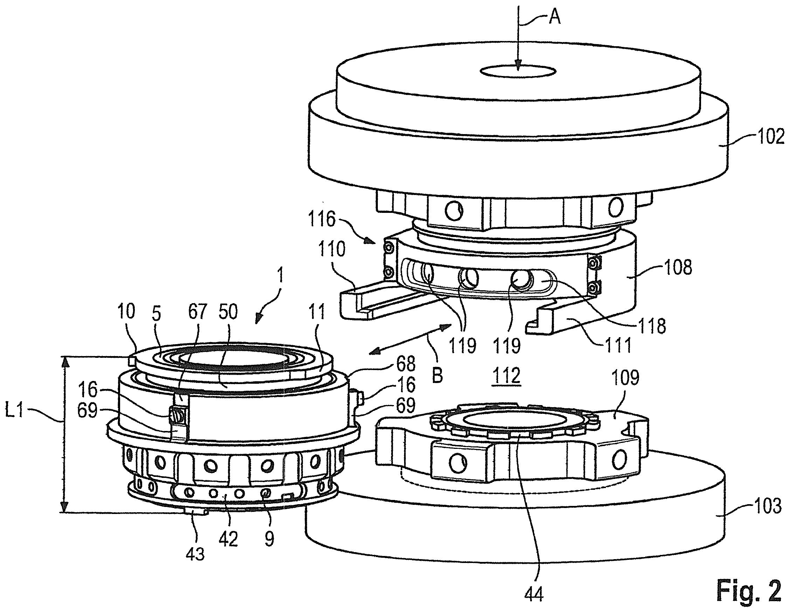

Erfindungsgemäß ist eine Bohrspüleinrichtung 100 mit vormontiertem Wechseleinsatz 1 vorgesehen, welcher komplett gewechselt werden kann. Dies ist in Fig. 2 durch den Doppelpfeil B schematisch angedeutet. Der vormontierte Wechseleinsatz wird dabei in einem Zwischenraum 112 zwischen dem stationären Spülrohr 102 und dem rotierenden Spülrohr 103 montiert. Am freien Ende des stationären Spülrohrs 102 ist dabei ein erster Adapter 108 vorgesehen und am gegenüberliegenden freien Ende des rotierenden Spülrohrs 103 ist ein zweiter Adapter 109 vorgesehen. Am ersten Adapter 108 sind ferner erste und zweite Führungsarme 110, 111 ausgebildet, welche ein leichtes Einführen des vormontierten Wechseleinsatzes 1 ermöglichen. Hierzu sind am Wechseleinsatz 1 an einem Anschlussbauteil 5 zwei Führungselemente 10, 11 vorgesehen. Die Führungselemente 10, 11 liegen dabei mit ihrer Unterseite an den schienenartigen Führungsarmen 110, 111 auf, so dass das Gewicht des Wechseleinsatzes 1 nach erfolgtem Aufschieben auf die Führungsarme 110, 111 von diesen getragen wird und die Montage erleichtert wird. Das Anschlussbauteil 5 umfasst ferner eine Umfangsnut 50 für einen Eingriff mit den Führungsarmen 110, 111.

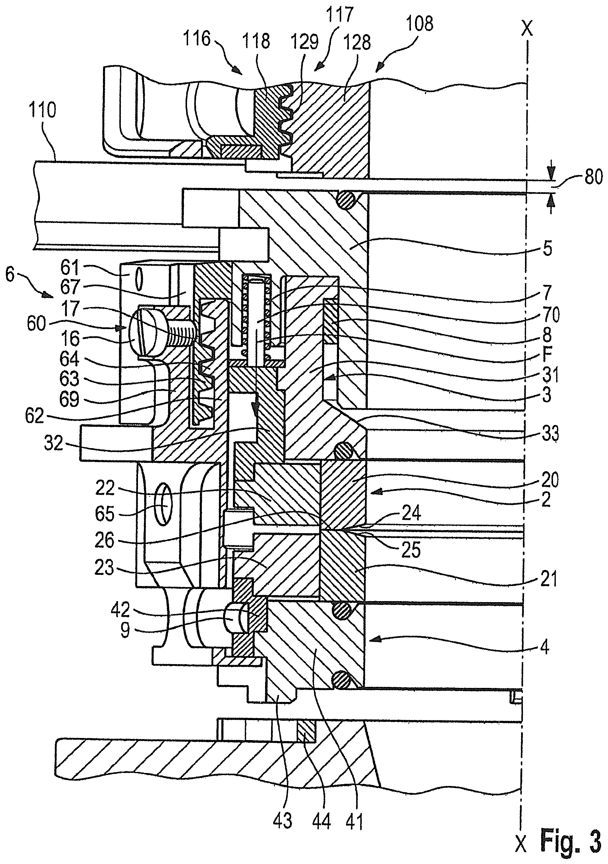

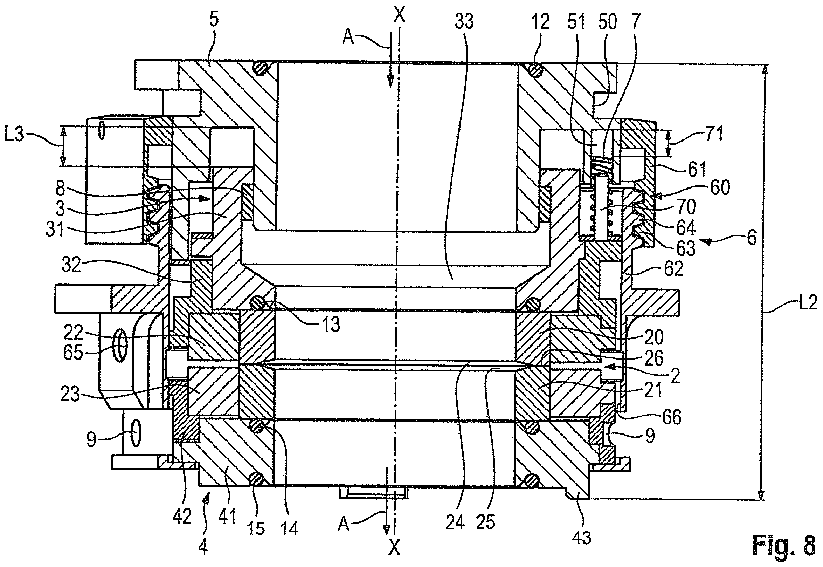

Der erfindungsgemäße vormontierte Wechseleinsatz 1 umfasst, wie insbesondere aus den Fig. 3 und 8 ersichtlich ist, eine Gleitringdichtungsanordnung 2 mit einem stationären Gleitring 20 und einem rotierenden Gleitring 21. Zwischen den beiden Gleitringen ist ein Dichtspalt 26 ausgebildet. Der stationäre Gleitring 20 ist von einer ersten Bandage 22 umschlossen und der rotierende Gleitring 21 ist von einer zweiten Bandage 23 umschlossen.

Am stationären Gleitring 20 ist ferner an dessen innerer Umfangsseite eine erste Fase 24 vorgesehen und am rotierenden Gleitring 21 in spiegelbildlicher Weise zum Dichtspalt eine zweite Fase 25 vorgesehen. Die beiden Fasen 24, 25 verlaufen in Radialrichtung des Wechseleinsatzes.

Der erste Adapter 108 der Bohrspüleinrichtung 100 umfasst einen in Axialrichtung wirkenden ersten Verstellmechanismus 116. Der erste Verstellmechanismus 116 umfasst eine erste Schraubverbindung 117 mit einem Außenring 118 und einem Innenring 128, zwischen welchen ein Gewinde 129 vorgesehen ist. Somit kann durch eine Relativverdrehung zwischen dem Außenring 118 und dem Innenring 119 eine axiale Länge des ersten Adapters 108 vergrößert oder verkleinert werden.

Der Wechseleinsatz 1 umfasst ferner einen ersten Gleitringträger 3, welcher den stationären Gleitring 20 hält und einen zweiten Gleitringträger 4, welcher den rotierenden Gleitring 21 hält. Der erste Gleitringträger 3 ist zweiteilig aus einem ersten Trägerteil 31 und einem zweiten Trägerteil 32 ausgebildet. Am inneren Umfang des ersten Gleitringträgers 3 ist ferner eine Schulter 33 vorgesehen.

Der zweite Gleitringträger 4 ist ebenfalls zweiteilig mit einem ersten Trägerteil 41 und einem zweiten Trägerteil ausgebildet, welches ein Verstellring 42 ist, und weist ferner mehrere in Axialrichtung X-X des Wechseleinsatzes 1 verlaufende Vorsprünge 43 auf. Die Vorsprünge 43 dienen zur Übertragung eines Drehmoments vom angetriebenen, rotierenden Spülrohr 103 über den zweiten Adapter 109 und den zweiten Gleitringträger 4 auf den rotierenden Gleitring 21.

Weiterhin umfasst der vormontierte Wechseleinsatz 1 einen zweiten Verstellmechanismus 6 mit einer zweiten Schraubverbindung 60. Der zweite Verstellmechanismus 6 umfasst eine Außenhülse 61 mit einem Innengewinde 63 und eine Innenhülse 62 mit einem Außengewinde 64. Dabei greifen das Innengewinde 63 und das Außengewinde 64 ineinander ein und bei einer Relativverdrehung zwischen der Außenhülse 61 und der Innenhülse 62 erfolgt eine Längung des vormontierten Wechseleinsatzes in Axialrichtung X-X des zweiten Verstellmechanismus 6. In Fig. 2 ist dabei eine Ausgangslänge L1 des vormontierten Wechseleinsatzes 1 in Axialrichtung gezeigt. Fig. 8 zeigt die vollständig ausgefahrene Axiallänge L2, welche um eine Länge L3 länger als die Ausgangslänge L1 ist.

Die Innenhülse 62 überdeckt dabei in Radialrichtung die Gleitringdichtung 2 und stellt eine Führungsfläche 66 für den rotierenden Gleitring 21 an einer radialen Außenseite der Bandage 23 bereit. Die Innenhülse 62 hält ferner auch den zweiten Gleitringträger 4 über den Verstellring 42 des zweiten Gleitringträgers 4.

Weiterhin umfasst der erfindungsgemäße Wechseleinsatz 1 mehrere Federelemente 7, welche zwischen dem Anschlussbauteil 5 für einen Anschluss an das stationäre Spülrohr 102 und dem ersten Gleitringträger 3 angeordnet sind. Jedes Federelement 7 ist um einen Stift 70 zur Führung und Positionierung der Federelemente angeordnet. Die Federelemente 7 sind in Taschen 51 im Anschlussbauteil 5 angeordnet.

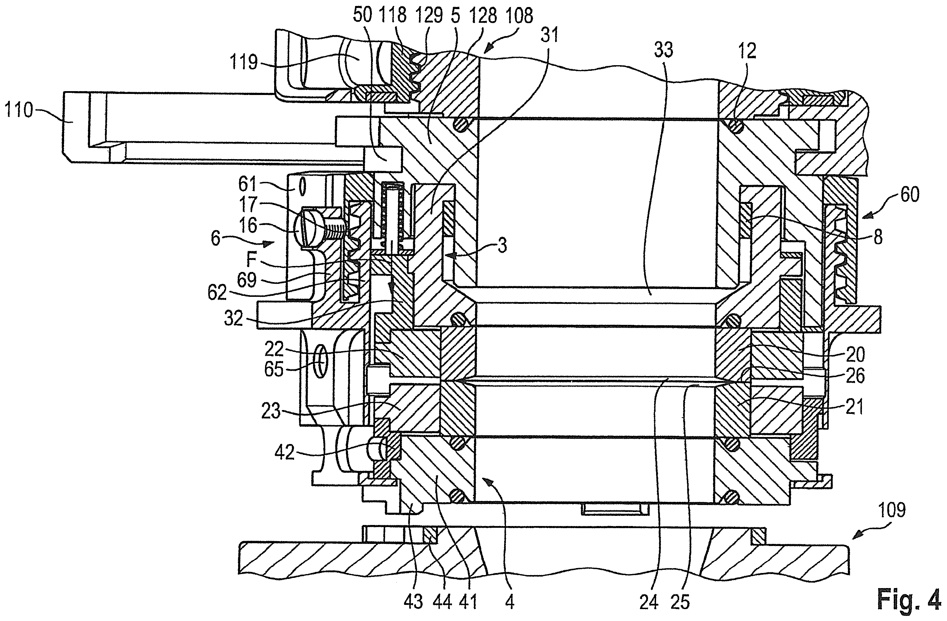

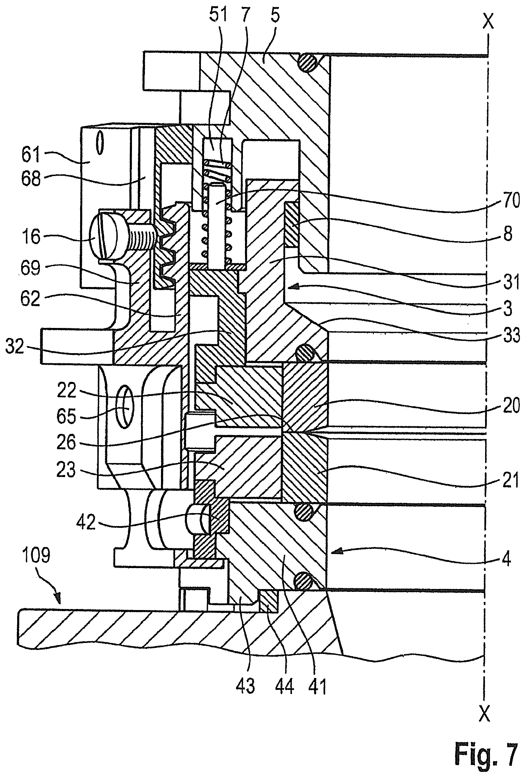

Die Federelemente 7 stellen sicher, dass im nicht endmontierten Zustand des Wechseleinsatzes (Fig. 2, 3 und 4) eine Kraft F über den ersten Gleitringträger 3 auf den stationären Gleitring 20 ausgeübt wird, so dass der stationäre Gleitring 20 sicher am rotierenden Gleitring 21 anliegt und die Gleitflächen sich berühren (vgl. Fig. 4). Im endmontierten Zustand, welcher in den Fig. 7 und 8 dargestellt ist, üben die Federelemente 7 jedoch keinerlei Federkraft auf die Gleitringdichtung 2 aus. Dies wird z.B. durch entsprechende Auslegung einer Länge der Federn 7 erreicht, so dass im endmontierten Zustand des Wechseleinsatzes 1 in der Bohrspüleinrichtung 100 ein Federabstand 71 zwischen einem Ende der Federelemente 7 und dem Anschlussbauteil 5 vorhanden ist, wie in Fig. 8 gezeigt.

Die Federelemente 7 bilden somit eine Transportsicherung, welche vor einer endgültigen Endmontage des Wechseleinsatzes 1 eine ständige Vorspannung in Axialrichtung X-X auf die Gleitringdichtung ausübt.

Weiter ist zwischen dem Anschlussbauteil 5 und dem ersten Gleitringträger 3 ein Dichtelement 8 angeordnet. Weiterhin umfasst der Wechseleinsatz 1 ein erstes, zweites, drittes und viertes Nebendichtelement 12, 13, 14, 15. Das erste Nebendichtelement 12 dichtet dabei zwischen dem Anschlussbauteil 5 und dem stationären Spülrohr 102 ab, das zweite Nebendichtelement 13 dichtet zwischen dem ersten Gleitringträger 3 und dem stationären Gleitring 20 ab, das dritte Nebendichtelement 14 dichtet zwischen dem rotierenden Gleitring 21 und dem zweiten Gleitringträger 4 ab und das vierte Nebendichtelement 15 dichtet zwischen dem zweiten Gleitringträger 4 und dem zweiten Adapter 109 zum rotierenden Spülrohr 103 ab.

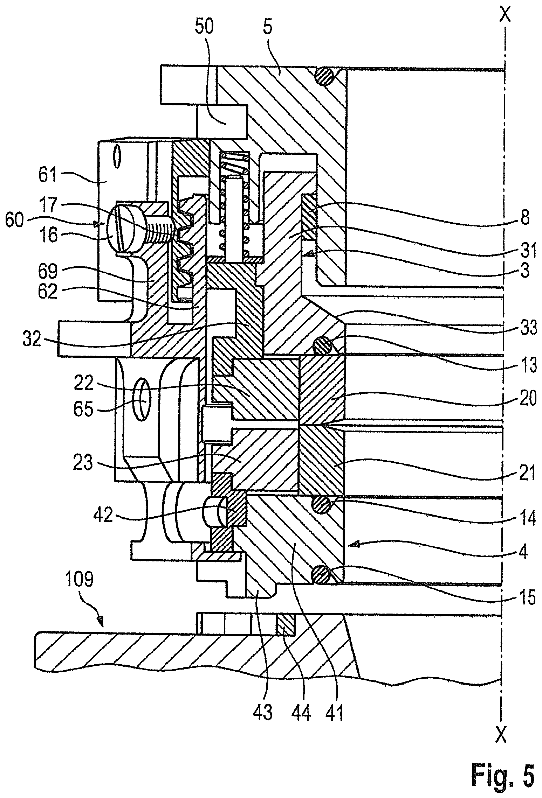

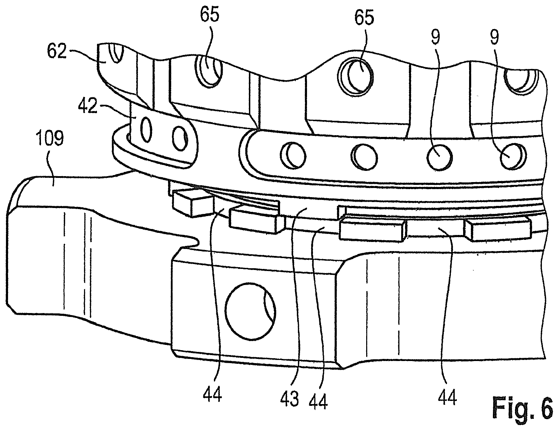

Der Verstellring 42 des zweiten Gleitringträgers, welcher von außerhalb des vormontierten Wechseleinsatzes 1 mittels eines Werkzeugs an Öffnungen 9 verdrehbar ist, ermöglicht eine Ausrichtung des zweiten Gleitringträgers 4 in Umfangsrichtung. Dies ist notwendig, damit eine Drehmomentübertragung über die in Axialrichtung X-X vorstehenden Vorsprünge 43 vom zweiten Adapter 109 über den zweiten Gleitringträger 4 auf den rotierenden Gleitring 21 möglich ist. Dieser Vorgang ist in den Fig. 5 und 6 ersichtlich.

Die ersten und zweiten Werkzeugausnehmungen 119 und 65 sowie die Öffnungen 9 am Verstellring weisen bevorzugt eine gleiche geometrische Form, z.B. eine Bohrung, auf, damit sie mittels des gleichen Werkzeugs verstellbar sind.

Der zweite Adapter 109 weist entsprechend den Vorsprüngen 43 gebildete Ausnehmungen 44 auf, so dass eine formschlüssige Verbindung zwischen dem zweiten Adapter 109 und dem Verstellring 42 möglich ist.

Zur Fixierung einer Relativposition des zweiten Verstellmechanismus 6 zwischen der Außenhülse 61 und der Innenhülse 62 ist weiterhin eine Verdrehsicherung 16 vorgesehen. Die Verdrehsicherung 16 dieses Ausführungsbeispiels ist ein Schraubbolzen, welcher eine Relativposition zwischen der Außenhülse 61 und der Innenhülse 62 fixiert. Der Schraubbolzen umfasst dabei eine federvorgespannte Kugel, welche in der noch nicht endmontierten Position in eine erste Ausnehmung 67 am Außenumfang der Außenhülse 61 eingerastet ist (Fig. 3). Die Verdrehsicherung ist dabei an einem mit der Innenhülse verbundenen Arm 69 angeordnet, so dass die Außenhülse 61 zwischen dem Arm 69 und der Innenhülse angeordnet ist (vgl. Fig. 3 und 4). In der vollständig endmontierten Position (Fig. 7) ist die Kugel in einer zweiten Ausnehmung 68 an der Außenhülse 61 eingerastet, welche als Indikator für das Erreichen der Endposition des in Axialrichtung verlängerten Wechseleinsatzes dient. Die beiden Ausnehmungen 67, 68 sind um ca. eine Viertelumdrehung zwischen Innenhülse und Außenhülse am Umfang der Außenhülse 61 angeordnet. Durch das Einrasten der Kugel in den Ausnehmungen 67, 68 hat ein Monteur jeweils während des Vormontieren des Wechseleinsatzes einen Indikator für die richtige Position der Bauteile Innenhülse und Außenhülse zueinander als auch in der endmontierten Position durch Einrasten in der zweiten Ausnehmung 68. Damit ist eine sichere Montage auch unter erschwertesten Umweltbedingungen möglich.

Da erfindungsgemäß der Wechseleinsatz vormontiert ist, kann der Wechseleinsatz problemlos in einer Werkstatt komplett vormontiert werden. Hierbei können auch auf einfache Weise sämtliche Nebendichtelemente 12, 13, 14, 15 ersetzt werden. Die Transportsicherung mittels der Federelemente 7 stellt dabei sicher, dass während des Transports und des Einbaues bis kurz vor Erreichen einer Endeinbauposition immer eine Vorspannung auf die Gleitringe 20, 21 ausgeübt wird, so dass die Gleitflächen der Gleitringe eng aneinander anliegen und eine Beschädigung der Gleitflächen vermieden werden kann. Erfindungsgemäß kann somit auf einfache und schnelle Weise ein kompletter Wechsel des Wechseleinsatzes mit Gleitringdichtungsanordnung ermöglicht werden. Damit können bei jedem Austausch des Wechseleinsatzes neue Nebendichtelemente verwendet werden, wodurch sich ein reduzierter Wartungsbedarf und eine jeweils längere Einsatzdauer des Wechseleinsatzes ergibt. Bei einem neuen Wechseleinsatz können auch die Federelemente 7 jeweils ausgetauscht werden, falls notwendig. Da die Federelemente 7 in den Taschen 51 angeordnet sind, sind sie jedoch sehr gut gegenüber dem gepumpten Medium geschützt, so dass ein Wechsel der Federelemente 7 häufig nicht notwendig ist.

Der Wechselvorgang wird nachfolgend im Detail beschrieben. Nachdem der auszuwechselnde Wechseleinsatz aus der Bohrspüleinrichtung 100 entfernt wurde, wird, wie in Fig. 2 angedeutet, ein neuer, vormontierter Wechseleinsatz 1 in die Bohrspüleinrichtung 100 eingeschoben. Hierbei wird der neue, vormontierte Wechseleinsatz 1 an der Umfangsnut 50 und den Führungselementen 10, 11 auf die beiden Führungsarme 110, 111 aufgeschoben, so dass nach einem kurzen Aufschiebeweg das komplette Gewicht des Wechseleinsatzes 1 durch die Führungsarme 110, 111 getragen wird. Hierdurch wird eine Montage des Wechseleinsatzes, welcher üblicherweise auf einer gewissen Höhe im Bohrturm 101 erfolgt, und auch bei sehr extremen Witterungsbedingungen ausführbar sein muss, deutlich erleichtert. Ein Monteur muss nun den vormontierten Wechseleinsatz 1 einfach nur noch entlang der Führungsarme 110, 111 in die Montageposition schieben. Diese eingeschobene Position ist in Fig. 3 dargestellt. Dabei ist ein erster Abstand 80 zwischen einer Stirnfläche des Anschlussbauteils 5 und einer Stirnfläche des ersten Adapters 108, welcher am stationären Spülrohr 102 angeordnet ist, vorhanden (vgl. Fig. 3).

In einem nächsten Schritt wird dieser erste Abstand 80 eliminiert, indem eine Länge des ersten Adapters 108 in Axialrichtung X-X des Wechseleinsatzes mittels des ersten Verstellmechanismus 116 verändert wird (Fig. 3). Hierbei umfasst der erste Adapter 108 einen Außenring 118 und einen Innenring 128, zwischen welchen ein Gewinde 129 vorhanden ist, so dass durch Drehen wenigstens eines der Ringe der Innenring 128 mit dem Anschlussbauteil 5 in Kontakt kommt. Diese Position ist in Fig. 4 dargestellt. In diesem Ausführungsbeispiel weist der Außenring 118 erste Werkzeugausnehmungen 119 in Form von zylindrischen Bohrungen auf, um eine Relativverdrehung zwischen dem Außenring 118 und dem Innenring 128 zu ermöglichen. Dadurch ist eine Verbindung zwischen dem vormontierten Wechseleinsatz 1 und dem stationären Spülrohr 102 über den ersten Adapter 108 vorhanden. Da die Verbindung statisch ist, reicht zur Abdichtung das erste Nebendichtelement 12. Die Axiallänge L1 des vormontierten Wechseleinsatzes wurde noch nicht verändert.

In einem nächsten Schritt wird nun eine Verbindung zwischen dem vormontierten Wechseleinsatz 1 und dem rotierenden Spülrohr 103 ausgeführt. Hierzu wird der zweite Verstellmechanismus 6 betätigt, indem die Innenhülse 62 relativ zur Außenhülse 61 gedreht wird. Die Innenhülse 62 weist dabei auch einen zur Außenseite freiliegenden Bereich auf, in welchem mehrere zweite Werkzeugausnehmungen 65 zum Ansetzen eines Werkzeugs vorhanden sind. Die Innenhülse 62 wird dabei relativ zur Außenhülse 61 solange gedreht, bis die in Fig. 5 gezeigte Position erreicht ist. In dieser Position ist noch keine endgültige Verbindung zwischen dem vormontierten Wechseleinsatz 1 und dem zweiten Adapter 109 am rotierenden Spülrohr 103 ausgebildet, sondern es muss noch eine Ausrichtung des Drehmomentübertragungsmechanismus zwischen dem zweiten Adapter 109 und dem zweiten Gleitringträger 4 erfolgen. Hierzu wird der Verstellring 42 in Umfangsrichtung verdreht, was ebenfalls mittels eines von außen an den Verstellring 42 ansetzbaren Werkzeugs ermöglicht wird. Die Ausrichtung ist dabei derart, dass die Vorsprünge 43 des zweiten Gleitringträgers 4 über den entsprechenden Ausnehmungen 44 des zweiten Adapters 109 angeordnet sind, wie in Fig. 6 gezeigt.

Nachdem die Ausrichtung erfolgt ist, wird die Innenhülse 62 des Verstellmechanismus 6 weiter relativ zur Außenhülse 61 verdreht, so dass eine weitere Längung des Wechseleinsatzes 1 in Axialrichtung X-X erfolgt, bis die verbindende Endposition, welche in Fig. 7 und 8 dargestellt ist, erreicht ist (Axiallänge L2).

Fig. 8 zeigt ebenfalls den vormontierten Wechseleinsatz in der verbindenden Endposition, wobei aus Übersichtlichkeitsgründen der erste und zweite Adapter 108, 109 des stationären und rotierenden Spülrohrs nicht dargestellt sind.

Durch die axiale Längung des Wechseleinsatzes 1 können sich die Federelemente 7 vollständig entspannen, so dass der in Fig. 8 eingezeichnete Federabstand 71 zwischen dem freien Ende des Federelements 7 und dem Anschlussbauteil 5 vorhanden ist. Im Betrieb wird dann der Druck auf die Gleitringe über die Schulter 33 aufgebaut. Die Federelemente können auch so ausgelegt sein, dass kein Federabstand zum Anschlussbauteil 5 vorhanden ist, jedoch keine Federkraft mehr zwischen Anschlussbauteil 5 und erstem Gleitringträger 4 wirkt.

Die Federelemente 7 sind dabei in entsprechend ausgebildeten Taschen 51 im Anschlussbauteil 5 angeordnet.

Als letzter Schritt wird dann die Verdrehsicherung 16 für eine Fixierung einer Relativposition zwischen der Außenhülse 61 und der Innenhülse 62 des Verstellmechanismus 6 aktiviert. Hierbei rastet die Kugel der Verdrehsicherung in der zweiten Ausnehmung 68 ein. Damit hat der Monteur einen Indikator, dass der Wechseleinsatz auf die richtige Axiallänge L2 verlängert wurde. Anschließend ist die Bohrspüleinrichtung 100 wieder einsatzbereit.

Im Betrieb wird dann ein Druck über die Schulter 33 am ersten Gleitringträger 3 auf die Gleitringe ausgeübt, so dass eine sichere Abdichtung am Dichtspalt 26 möglich ist. In der endmontierten Position weist der Wechseleinsatz 1 somit eine um die Länge L3 verlängerte Axiallänge, ausgehend von der Axiallänge L1 (Fig. 2) zur Axiallänge L2 (Fig. 8) auf.

Durch die erfindungsgemäße Idee des Vorsehens einer Bohrspüleinrichtung 100 mit einem ersten und zweiten Verstellmechanismus 116, 6, welche jeweils in Axialrichtung eine Verlängerung ermöglichen, kann ein schneller und sicherer Wechsel einer Gleitringdichtung vorgesehen werden. Die Gleitringdichtung ist dabei in einem vormontierten auswechselbaren Wechseleinsatz 1 integriert. Bei einem Wechsel der Gleitringdichtungen wird dabei der komplette Wechseleinsatz 1 ausgetauscht. Dadurch kann die Gefahr von Beschädigungen der Gleitringe 20, 21 bei einem Wechsel vermieden werden. Wenn der erste und zweite Verstellmechanismus jeweils eine Schraubverbindung aufweisen, kann ein besonders schneller und einfacher Wechsel durch eine Relativverdrehung zwischen den beiden, die Schraubverbindung bildenden Bauteile ermöglicht werden. Die Relativverdrehung wird dabei bevorzugt mittels eines gleichen Werkzeugs vorgenommen. Ein Hantieren mit einzelnen Gleitringen am Bohrturm ist nicht notwendig. Die Steigungen der beiden Schraubverbindungen der Verstellmechanismen sind dabei besonders bevorzugt gleich vorgesehen. Es sei ferner angemerkt, dass auch die Werkzeugaufnahme am Verstellring 42 gleich wie am ersten und zweiten Verstellmechanismus ausgebildet ist. Dadurch ist zur kompletten Montage des auswechselbaren Wechseleinsatzes 1 nur ein einziges Werkzeug notwendig. Der Austausch kann dabei von nur einem Monteur durchgeführt werden.

### Bezuqszeichenliste

- 1: Wechseleinsatz
- 2: Gleitringdichtungsanordnung
- 3: erster Gleitringträger
- 4: zweiter Gleitringträger
- 5: Anschlussbauteil
- 6: zweiter Verstellmechanismus
- 7: Federelement
- 8: Dichtelement
- 9: Öffnung
- 10, 11: Führungselemente
- 12-15: Nebendichtelemente
- 16: Verdrehsicherung
- 17: vorgespanntes Rastelement
- 20: stationärer Gleitring
- 21: rotierender Gleitring
- 22: erste Bandage
- 23: zweite Bandage
- 24: erste Fase
- 25: zweite Fase
- 26: Dichtspalt
- 31: erstes Trägerteil
- 32: zweites Trägerteil
- 33: Schulter
- 41: erstes Trägerteil
- 42: Verstellring
- 43: Vorsprung
- 44: Ausnehmung
- 50: Umfangsnut
- 51: Tasche
- 60: zweite Schraubverbindung
- 61: Außenhülse
- 62: Innenhülse
- 63: Innengewinde
- 64: Außengewinde
- 65: zweite Werkzeugausnehmung
- 66: Führungsfläche
- 67: erste Ausnehmung
- 68: zweite Ausnehmung
- 69: Arm
- 70: Stift zur Positionierung
- 71: Federabstand
- 80: erster Abstand
- 100: Bohrspüleinrichtung
- 101: Bohrturm
- 102: stationäres Spülrohr
- 103: rotierendes Spülrohr
- 104: Bohrkopf
- 105: Pumpe
- 106: Bohrloch
- 107: Trenneinrichtung
- 108: erster Adapter
- 109: zweiter Adapter
- 110: erster Führungsarm
- 111: zweiter Führungsarm
- 112: Zwischenraum
- 116: erster Verstellmechanismus
- 117: erste Schraubverbindung
- 118: Außenring
- 119: erste Werkzeugausnehmung
- 128: Innenring
- 129: Gewinde

## Patentansprüche

1. Bohrspüleinrichtung (100), umfassend:
- ein stationäres Spülrohr (102),
- ein rotierendes Spülrohr (103),
- einen vormontierten, auswechselbaren Wechseleinsatz (1) zur Verbindung des stationären Spülrohrs (102) mit dem rotierenden Spülrohr (103), und
- einen ersten Adapter (108), welcher zwischen dem stationären Spülrohr (102) und dem Wechseleinsatz (1) angeordnet ist,
- wobei der erste Adapter (108) einen in Axialrichtung wirkenden, ersten Verstellmechanismus (116) zur Änderung einer Axiallänge des ersten Adapters (108) umfasst,
- wobei der Wechseleinsatz (1) eine Gleitringdichtungsanordnung mit einem stationären Gleitring (20) und einem rotierenden Gleitring (21) umfasst,
- wobei zwischen Gleitflächen der Gleitringe (20, 21) ein Dichtspalt (26) definiert ist,
**dadurch gekennzeichnet, dass**
- der Wechseleinsatz (1) einen in Axialrichtung wirkenden, zweiten Verstellmechanismus (6) zur Änderung einer Axiallänge des Wechseleinsatzes (1) umfasst,
- der Wechseleinsatz einen ersten Gleitringträger (3) umfasst,
- der Gleitringträger (3) den stationären Gleitring (20) hält,
- wobei am inneren Umfang des Gleitringträgers (3) eine Schulter (33) vorgesehen ist, und
- wobei ein Druck über die Schulter (33) eine sichere Abdichtung am Dichtspalt (26) ermöglicht.

2. Bohrspüleinrichtung nach Anspruch 1, **dadurch gekennzeichnet, dass** der erste Verstellmechanismus (116) eine erste Schraubverbindung (117) mit einem Außenring (118) mit einem Innengewinde, und einen Innenring (128) mit einem Außengewinde umfasst.

3. Bohrspüleinrichtung nach Anspruch 2, **dadurch gekennzeichnet, dass** der Außenring (118) der ersten Schraubverbindung erste Werkzeugausnehmungen (119) an einer Außenumfangsfläche umfasst, welche für eine Aufnahme eines Werkzeugs zum Drehen des Außenrings (118) relativ zum Innenring (128) eingerichtet sind.

4. Bohrspüleinrichtung nach einem der vorhergehenden Ansprüche, **dadurch gekennzeichnet, dass** der zweite Verstellmechanismus (6) eine zweite Schraubverbindung (60) mit einer Außenhülse (61) mit einem Innengewinde und einer Innenhülse (62) mit einem Außengewinde umfasst.

5. Bohrspüleinrichtung nach Anspruch 4, **dadurch gekennzeichnet, dass** eine Axiallänge der Innenhülse (62) größer ist als ein Axiallänge der Außenhülse (61).

6. Bohrspüleinrichtung nach Anspruch 4 oder 5, **dadurch gekennzeichnet, dass** an der Innenhülse (62) an einem von der Außenhülse (61) unüberdeckten Bereich zweite Werkzeugausnehmungen (65) zur Aufnahme eines Werkzeugs zum Drehen der Innenhülse (62) relativ zur Außenhülse (61) vorgesehen sind.

7. Bohrspüleinrichtung nach Anspruch 6, **dadurch gekennzeichnet, dass** eine geometrische Form der ersten Werkzeugausnehmungen (119) und eine geometrische Form der zweiten Werkzeugausnehmungen (65) gleich ist.

8. Bohrspüleinrichtung nach einem der vorhergehenden Ansprüche, **dadurch gekennzeichnet, dass** der vormontierte Wechseleinsatz (1) an einem zum rotierenden Spülrohr (103) gerichteten Ende einen in Axialrichtung (X-X) vorstehenden Vorsprung (43) für eine Drehmomentübertragung vom rotierenden Spülrohr (103) auf den Wechseleinsatz (1) umfasst.

9. Bohrspüleinrichtung nach Anspruch 8, **dadurch gekennzeichnet, dass** der Wechseleinsatz (1) ferner einen Ausrichtring (42) umfasst, um den vorstehenden Vorsprung (43) in Umfangsrichtung auszurichten.

10. Bohrspüleinrichtung nach einem der vorhergehenden Ansprüche, ferner umfassend einen zweiten Adapter (109) zwischen dem rotierenden Spülrohr (103) und dem Wechseleinsatz (1).

11. Bohrspüleinrichtung nach einem der vorhergehenden Ansprüche, ferner umfassend eine Montagehilfseinrichtung, welche am stationären Spülrohr (102) angeordnet ist, um eine Montage und Demontage des vormontierten Wechseleinsatzes (1) zu unterstützen.

12. Bohrspüleinrichtung nach Anspruch 11, **dadurch gekennzeichnet, dass** die Montagehilfseinrichtung einen ersten Führungsarm (110) und einen zweiten Führungsarm (111) umfasst, welche am ersten Adapter (108) angeordnet sind.

13. Bohrspüleinrichtung nach Anspruch 12, **dadurch gekennzeichnet, dass** der vormontierte Wechseleinsatz (1) eine Umfangsnut (50) für einen Eingriff mit den Führungsarmen (110, 111) umfasst.

14. Bohrspüleinrichtung nach Anspruch 4, **dadurch gekennzeichnet, dass** der zweite Verstellmechanismus (6) eine Verdrehsicherung (16) umfasst, um eine Relativposition zwischen der Außenhülse (61) und der Innenhülse (62) zu fixieren.

15. Bohrspüleinrichtung nach Anspruch 14, **dadurch gekennzeichnet, dass** die Verdrehsicherung (16) einen Schraubbolzen mit einem an einer Spitze des Schraubbolzens federbelasteten Rastelement (17) umfasst, welches in einer vormontierten Position in eine erste Ausnehmung (67) an der Außenhülse (61) einrastet und in einer endmontierten Position in eine zweite Ausnehmung (68) an der Außenhülse (61) einrastet, wobei die Innenhülse (62) des zweiten Verstellmechanismus (6) relativ zur Außenhülse (61) von einer vormontierten Position zu einer endmontierten Position drehbar ist und das Rastelement (17) in einer vormontierten Position des zweiten Verstellmechanismus (6) in die erste Ausnehmung (67) an der Außenhülse (61) einrastet und das Rastelement (17) in einer endmontierten Position des zweiten Verstellmechanismus (6) in die zweite Ausnehmung (68) an der Außenhülse (61) einrastet.

## Claims

1. Drill wash device (100), comprising:
- a stationary washpipe (102),
- a rotating washpipe (103),
- a pre-mounted, replaceable exchange insert (1) for connecting the stationary washpipe (102) to the rotating washpipe (103), and
- a first adapter (108) which is arranged between the stationary washpipe (102) and the exchange insert (1),
- wherein the first adapter (108) comprises a first adjusting mechanism (116) operative in axial direction for changing an axial length of the first adapter (108),
- wherein the exchange insert (1) comprises a mechanical seal arrangement with a stationary slide ring (20) and a rotating slide ring (21),
- wherein a sealing gap (26) is defined between sliding surfaces of the slide rings (20, 21),
**characterized in that**
- the exchange insert (1) comprises a second adjusting mechanism (6) operative in axial direction for changing an axial length of the exchange insert (1),
- the exchange insert comprises a first slide ring carrier (3),
- the slide ring carrier (3) holds the stationary slide ring (20),
- wherein a shoulder (33) is provided on an inner circumference of the slide ring carrier (3), and
- wherein a pressure via the shoulder (33) enables a safe sealing at the sealing gap (26).

2. Drill wash device according to claim 1, **characterized in that** the first adjusting mechanism (116) comprises a first screw connection (117) with an outer ring (118) with an internal thread, and an inner ring (128) with an external thread.

3. Drill wash device according to claim 2, **characterized in that** the outer ring (118) of the first screw connection comprises first tool recesses (119) on an outer circumferential surface which are configured for receiving a tool for rotating the outer ring (118) relative to the inner ring (128).

4. Drill wash device according to any one of the preceding claims, **characterized in that** the second adjusting mechanism (6) comprises a second screw connection (60) with an external sleeve (61) with an internal thread and an internal sleeve (62) with an external thread.

5. Drill wash device according to claim 4, **characterized in that** an axial length of the internal sleeve (62) is greater than an axial length of the external sleeve (61).

6. Drill wash device according to claim 4 or 5, **characterized in that** second tool recesses (65) are provided on the internal sleeve (62) on a portion not covered by the external sleeve (61) for receiving a tool for rotating the internal sleeve (62) relative to the external sleeve (61).

7. Drill wash device according to claim 6, **characterized in that** a geometric shape of the first tool recesses (119) and a geometric shape of the second tool recesses (65) are identical.

8. Drill wash device according to any one of the preceding claims, **characterized in that** at an end directed towards the rotating washpipe (103) the pre-mounted exchange insert (1) comprises a projection (43) protruding in an axial direction (X-X) for torque transmission from the rotating washpipe (103) to the exchange insert (1).

9. Drill wash device according to claim 8, **characterized in that** the exchange insert (1) further comprises an aligning ring (42) for aligning the protruding projection (43) in circumferential direction.

10. Drill wash device according to any one of the preceding claims, further comprising a second adapter (109) between the rotating washpipe (103) and the exchange insert (1).

11. Drill wash device according to any one of the preceding claims, further comprising a mounting aid which is arranged on the stationary washpipe (102) to support assembly and disassembly of the pre-mounted exchange insert (1).

12. Drill wash device according to claim 11, **characterized in that** the mounting aid comprises first guide arm (110) and a second guide arm (111)which are arranged on the first adapter (108).

13. Drill wash device according to claim 12, **characterized in that** the pre-mounted exchange insert (1) comprises circumferential groove (50) for engagement with the guide arms (110, 111).

14. Drill wash device according to claim 4, **characterized in that** the second adjusting mechanism (6) comprises an anti-rotation device (16) to fix a relative position between the external sleeve (61) and the internal sleeve (62).

15. Drill wash device according to claim 14, **characterized in that** the anti-rotation device (16) comprises a threaded bolt with a spring-loaded latching element (17) on a tip of the threaded bolt wherein the spring-loaded latching element (17) latches in a pre-mounted position into a first recess (67) on the external sleeve (61) and in an end-mounted position in a second recess (68) on the external sleeve (61), wherein the internal sleeve (62) of the second adjusting mechanism (6) is relatively rotatable to the external sleeve (61) from a pre-mounted position to an end-mounted position and the latching element (17) latches in a pre-mounted position of the second adjusting mechanism (6) into the first recess (67) on the external sleeve (61) and the latching element (17) latches in an end-mounted position of the second adjusting mechanism (6) into the second recess (68) on the external sleeve (61).

## Revendications

1. Dispositif de fluide de forage (100), comprenant :
- un tube de fluide stationnaire (102),
- un tube de fluide rotatif (103),
- une pièce d'insertion (1) pré-montée échangeable pour relier le tube de fluide stationnaire (102) au tube de fluide rotatif (103), et
- un premier adaptateur (108), qui est agencé entre le tube de fluide stationnaire (102) et la pièce d'insertion (1),
- dans lequel le premier adaptateur (108) comprend un premier mécanisme de réglage (116) agissant dans la direction axiale pour modifier une longueur axiale du premier adaptateur (108),
- dans lequel la pièce d'insertion (1) comprend un agencement de garniture mécanique avec une bague de glissement stationnaire (20) et une bague de glissement rotative (21),
- dans lequel une fente d'étanchéité (26) est définie entre des surfaces de glissement des bagues de glissement (20, 21),
**caractérisé en ce que**
- la pièce d'insertion (1) comprend un deuxième mécanisme de réglage (6) agissant dans la direction axiale pour modifier une longueur axiale de la pièce d'insertion (1),
- la pièce d'insertion comprend un premier support de bague de glissement (3),
- le support de bague de glissement (3) maintient la bague de glissement stationnaire (20),
- dans lequel un épaulement (33) est prévu sur la périphérie intérieure du support de bague de glissement (3), et
- dans lequel une pression permet par le biais de l'épaulement (33) une étanchéification sûre au niveau de la fente d'étanchéité (26).

2. Dispositif de fluide de forage selon la revendication 1, **caractérisé en ce que** le premier mécanisme de réglage (116) comprend un premier raccord vissé (117) avec une bague extérieure (118) avec un filetage intérieur, et une bague intérieure (128) avec un filetage extérieur.

3. Dispositif de fluide de forage selon la revendication 2, **caractérisé en ce que** la bague extérieure (118) du premier raccord vissé comprend de premiers évidements pour outil (119) au niveau d'une surface périphérique extérieure, qui sont aménagés pour une réception d'un outil de rotation de la bague extérieure (118) par rapport à la bague intérieure (128).

4. Dispositif de fluide de forage selon l'une quelconque des revendications précédentes, **caractérisé en ce que** le deuxième mécanisme de réglage (6) comprend un deuxième raccord vissé (60) avec une douille extérieure (61) avec un filetage intérieur et une douille intérieure (62) avec un filetage extérieur.

5. Dispositif de fluide de forage selon la revendication 4, **caractérisé en ce qu'**une longueur axiale de la douille intérieure (62) est supérieure à une longueur axiale de la douille extérieure (61).

6. Dispositif de fluide de forage selon la revendication 4 ou 5, **caractérisé en ce qu'**au niveau de la douille intérieure (62) au niveau d'une zone non recouverte par la douille extérieure (61), des deuxièmes évidements pour outil (65) sont prévus pour la réception d'un outil de rotation de la douille intérieure (62) par rapport à la douille extérieure (61).

7. Dispositif de fluide de forage selon la revendication 6, **caractérisé en ce qu'**une forme géométrique des premiers évidements pour outil (119) et une forme géométrique des deuxièmes évidements pour outil (65) sont identiques.

8. Dispositif de fluide de forage selon l'une quelconque des revendications précédentes, **caractérisé en ce que** la pièce d'insertion (1) pré-montée comprend à une extrémité dirigée vers le tube de fluide rotatif (103), une saillie (43) en saillie dans la direction axiale (X-X) pour une transmission de couple du tube de fluide rotatif (103) sur la pièce d'insertion (1).

9. Dispositif de fluide de forage selon la revendication 8, **caractérisé en ce que** la pièce d'insertion (1) comprend en outre une bague d'orientation (42) pour orienter la saillie (43) en saillie dans le sens périphérique.

10. Dispositif de fluide de forage selon l'une quelconque des revendications précédentes, comprenant en outre un deuxième adaptateur (109) entre le tube de fluide rotatif (103) et la pièce d'insertion (1).

11. Dispositif de fluide de forage selon l'une quelconque des revendications précédentes, comprenant en outre un dispositif d'aide au montage, qui est agencé au niveau du tube de fluide stationnaire (102) pour soutenir un montage et démontage de la pièce d'insertion (1) pré-montée.

12. Dispositif de fluide de forage selon la revendication 11, **caractérisé en ce que** le dispositif d'aide au montage comprend un premier bras de guidage (110) et un deuxième bras de guidage (111), qui sont agencés au niveau du premier adaptateur (108).

13. Dispositif de fluide de forage selon la revendication 12, **caractérisé en ce que** la pièce d'insertion (1) pré-montée comprend une rainure périphérique (50) pour une prise avec les bras de guidage (110, 111).

14. Dispositif de fluide de forage selon la revendication 4, **caractérisé en ce que** le deuxième mécanisme de réglage (6) comprend un dispositif anti-rotation (16) pour fixer une position relative entre la douille extérieure (61) et la douille intérieure (62).

15. Dispositif de fluide de forage selon la revendication 14, **caractérisé en ce que** le dispositif anti-rotation (16) comprend un boulon fileté avec un élément d'arrêt (17) à ressort au niveau d'une pointe du boulon fileté, qui s'enclenche dans une position pré-montée dans un premier évidement (67) au niveau de la douille extérieure (61) et s'enclenche dans une position montée finale dans un deuxième évidement (68) au niveau de la douille extérieure (61), dans lequel la douille intérieure (62) du deuxième mécanisme de réglage (6) est rotative par rapport à la douille extérieure (61) d'une position pré-montée à une position montée finale et l'élément d'enclenchement (17) s'enclenche dans une position pré-montée du deuxième mécanisme de réglage (6) dans le premier évidement (67) au niveau de la douille extérieure (61) et l'élément d'enclenchement (17) s'enclenche dans une position montée finale du deuxième mécanisme de réglage (6) dans le deuxième évidement (68) au niveau de la douille extérieure (61).
